# EUROPEAN PATENT APPLICATION

(11) **EP 4 197 405 A1**
(43) Date of publication of application: **21.06.2023**
(21) Application number: 21214718.5
(22) Date of filing: 15.12.2021
(51) Int. Cl.: A47J 31/44, A47J 31/46, A47J 31/52

(54) **INITIAL DISCHARGE OF COLD WATER IN A PREHEATING PROCESS OF A BEVERAGE MAKING DEVICE**

(71) Applicant: Versuni Holding B.V., 5656 AE Eindhoven (NL)
(72) Inventor: HOLWERDA, Simon Renze, 5656 AE Eindhoven (NL); DE MATTEIS, Enrico, 5656 AE Eindhoven (NL)
(74) Representative: Vollering, Stefanus Franciscus Maria

(57) **Abstract**

In the field of beverage making devices (10) comprising a brew chamber (23), a preheating procedure may be applied to a beverage making device (10) for the purpose of rinsing the brew chamber (23) with hot water prior to a beverage brewing process. However, a path (26) between a heater (24) of the beverage making device (10) and the brew chamber (23) is cold when the preheating procedure is initiated. Measures are taken to remove the cold water from the path (26) as mentioned, so that the rinsing procedure can be done more efficiently, wherein only hot water is used to heat up the brew chamber (23). As a result, the in-cup temperature of the first cup is not compromised, and the total volume of the water used in the rinsing procedure is kept as small as possible.

## Description

### FIELD OF THE INVENTION

The invention relates to a method of operating a beverage making device comprising a brew chamber configured to enable a beverage brewing process, a heater configured to heat water, a main conduit arrangement configured to enable transport of water from the heater to the brew chamber, and a water collecting area outside of the brew chamber, the method comprising performing a preheating procedure in which the brew chamber is rinsed with hot water prior to the beverage brewing process, wherein, during the preheating procedure, the heater is operated to heat water, and a supply of hot water from the heater to the brew chamber through the main conduit arrangement is realized.

Further, the invention relates to a beverage making device, comprising a brew chamber configured to enable a beverage brewing process, a heater configured to heat water, a main conduit arrangement configured to enable transport of water from the heater to the brew chamber, a water collecting area outside of the brew chamber, and a controller configured to control operation of the beverage making device, wherein the controller is configured to apply an algorithm designed to make the beverage making device perform a preheating procedure in which the brew chamber is rinsed with hot water prior to the beverage brewing process, and wherein the algorithm includes steps to operate the heater to heat water and to realize a supply of hot water from the heater to the brew chamber through the main conduit arrangement. For example, such a beverage making device may be a bean-to-cup espresso coffee machine comprising a bean grinder and a ground bean compressor.

### BACKGROUND OF THE INVENTION

WO 2020/126876 A1 discloses a bean-to-cup espresso coffee machine, which is a machine configured to perform both a function of grinding of coffee beans and a function of brewing espresso coffee by passing pressurized hot water through the coffee grinds to create an espresso coffee drink. The known coffee machine comprises a water container, a heater for heating water to generate hot water and optionally steam, and a water pump for pumping the heated water and steam. During a coffee brewing process, a brew chamber is filled with a suitable amount of coffee grinds. Further, both the heater and the water pump are operated, wherein the heated water is pumped from the heater to a brew chamber through a valve. Advantageously, the coffee brewing process is preceded by a start-up rinsing cycle aimed at preheating the brew chamber.

In the known coffee machine, the brew chamber is movable between a coffee grinds receiving position and a coffee brewing position. In the coffee grinds receiving position, the brew chamber is disconnected from the heater and is not in a position for receiving water, wherein the valve downstream of the heater is in a closed position. When the brew chamber is moved from the coffee grinds receiving position to the coffee brewing position, the valve is put to an opened position when the water pressure at the side of the heater exceeds a threshold under the influence of the water pump, wherein a water supply path from the heater to the brew chamber is established.

During the start-up rinsing cycle, the brew chamber is moved to the coffee brewing position and is rinsed with hot water. Under the influence of the hot water, the brew chamber walls are heated, as a result of which a temperature of the coffee to be brewed in the brew chamber and dispended from the brew chamber can be realized as desired, wherein the coffee is particularly prevented from getting too cold. However, in practice it still happens that the temperature of the coffee is lower than expected, especially the coffee supplied to the first cup when the coffee machine is operated. This problem may be alleviated by supplying more hot water to the brew chamber during the start-up rinsing cycle and/or allowing the hot water to stay longer in the brew chamber, but both options involve disadvantages, such as increased use of water that is not intended for the actual coffee brewing process and needs to be discharged in some way, and prolonged waiting time before the coffee can be emitted from the coffee machine.

### SUMMARY OF THE INVENTION

It is an object of the invention to improve the preheating procedure of a brew chamber of a beverage making device without needing to take costly measures, particularly without needing to add components to the beverage making device.

In view of the foregoing, the invention provides a method of operating a beverage making device comprising a brew chamber configured to enable a beverage brewing process, a heater configured to heat water, a main conduit arrangement configured to enable transport of water from the heater to the brew chamber, and a water collecting area outside of the brew chamber, the method comprising performing a preheating procedure in which the brew chamber is rinsed with hot water prior to the beverage brewing process, wherein, during the preheating procedure, the heater is operated to heat water, and a) a discharge of water from the main conduit arrangement to the water collecting area and b) a supply of hot water from the heater to the brew chamber through the main conduit arrangement are successively realized.

Similarly, the invention provides a beverage making device, comprising a brew chamber configured to enable a beverage brewing process, a heater configured to heat water, a main conduit arrangement configured to enable transport of water from the heater to the brew chamber, a water collecting area outside of the brew chamber, and a controller configured to control operation of the beverage making device, wherein the controller is configured to apply an algorithm designed to make the beverage making device perform a preheating procedure in which the brew chamber is rinsed with hot water prior to the beverage brewing process, and wherein the algorithm includes steps to operate the heater to heat water and to successively realize a) a discharge of water from the main conduit arrangement to the water collecting area and b) a supply of hot water from the heater to the brew chamber through the main conduit arrangement.

It follows from the foregoing definition of the method and the beverage making device according to the invention that the invention resides in realizing a discharge of water from the main conduit arrangement to the water collecting area prior to realizing a supply of hot water from the heater to the brew chamber through the main conduit arrangement during the preheating procedure. The invention is based on the insight that when a conventional preheating procedure is initiated, an amount of water as present in the main conduit arrangement is supplied to the brew chamber first, and that this amount of water is cold, so that this amount of water has an initial cooling effect on the brew chamber. This cooling effect is significant in view of the practical fact that the volume of the amount of the cold water can be as large as about 1/5 of the volume of the amount of water that is heated and that is supplied from the heater to the brew chamber during the preheating procedure, for example. By removing the first amount of water, the cooling influence of this amount of water on the brew chamber is removed, so that the effectiveness of the preheating procedure is increased, which eventually results in an increased in-cup temperature of the brewed beverage in comparison to the conventional situation. For the purpose of removing the cold water from the main conduit arrangement, use may be made of existing components of the beverage making device, in other words, there is no need to apply further components for realizing this functionality. In particular, an existing discharge path from the main conduit arrangement to the water collecting area may be used.

The functionality of discharging cold water from the main conduit arrangement so that a supply of the cold water to the brew chamber may particularly be realized by changing a condition of the main conduit arrangement during the preheating procedure, namely from a condition in which the main conduit arrangement is enabled to let out water to the water collecting area and disabled to let out water to the brew chamber to a condition in which the main conduit arrangement is enabled to let out water to the brew chamber. In the terms of the beverage making device according to the invention, this implies that the beverage making device is configured to enable setting a condition of the main conduit arrangement to be one of a condition in which the main conduit arrangement is enabled to let out water to the water collecting area and disabled to let out water to the brew chamber and a condition in which the main conduit arrangement is enabled to let out water to the brew chamber, wherein the steps of the algorithm to successively realize a) a discharge of water from the main conduit arrangement to the water collecting area and b) a supply of hot water from the heater to the brew chamber through the main conduit arrangement involve changing the condition of the main conduit arrangement from the first condition to the second condition.

Advantageously, the known option of the brew chamber being movably arranged in the beverage making device is applied in the context of the invention. The fact is that when the brew chamber is movably arranged in the beverage making device, this offers a practical possibility of discharging cold water from the main conduit arrangement prior to supplying hot water to the brew chamber during the preheating procedure. In particular, it may be so that intended effects of establishing and closing water paths during the preheating procedure can be achieved by controlling the position of the brew chamber, in view of the fact that the position of the brew chamber can be varied between a position at which the brew chamber is decoupled from the main conduit arrangement and a position at which the brew chamber is coupled to the main conduit arrangement. In this respect, it is noted that the position at which the brew chamber is decoupled from the main conduit arrangement can be a position involving the above-mentioned condition of the main outlet in which the main conduit arrangement is enabled to let out water to the water collecting area and disabled to let out water to the brew chamber, and the position at which the brew chamber is coupled to the main conduit arrangement can be a position involving the above-mentioned condition of the main conduit arrangement in which the main conduit arrangement is enabled to let out water to the brew chamber. In a practical embodiment, the beverage making device further comprises a matter supply area configured to supply brewable matter such as coffee grinds, wherein the position at which the brew chamber is decoupled from the main conduit arrangement is a position at which coupling of the brew chamber to the matter supply area takes place for enabling a supply of the brewable matter to the brew chamber at the start of the beverage brewing process. For the purpose of putting the invention to practice, it is not necessary to define other positions of the brew chamber besides the positions which are already defined in view of the beverage brewing process.

In the case that the brew chamber is movably arranged in the beverage making device, it may be practical if the beverage making device comprises a check valve arranged in the main conduit arrangement, an inlet of the check valve being coupled to the heater and an outlet extending above the water collecting area, and further comprises an intermediate valve coupled to the brew chamber that is configured to cause interruption of a water path from the outlet of the check valve to the water collecting area and establishment of a water path from the outlet of the check valve to the brew chamber when the brew chamber is moved from the position of being decoupled from the main conduit arrangement to the position of being coupled to the main conduit arrangement. In that way, first setting a water path so as to be from the outlet of the check valve to the water collecting area so that water can be discharged from a portion of the main conduit arrangement between the heater and the check valve and subsequently setting the water path so as to be from the outlet of the check valve to the brew chamber so that water can be transported from the heater to the brew chamber can simply be done by first having the brew chamber at the position of being decoupled from the main conduit arrangement and putting the brew chamber from that position to the position of being coupled to the main conduit arrangement at an appropriate moment, i.e. after a discharge of cold water from the main conduit arrangement downstream of the heater.

In respect of the appropriate moment of switching from the discharge of water from the main conduit arrangement to the water collecting area to the supply of hot water from the heater to the brew chamber through the main conduit arrangement, it is noted that it is advantageous if the discharge of water from the main conduit arrangement to the water collecting area is terminated when a volume of the discharged water is practically the same as a volume of the main conduit arrangement between the heater and an exit position on the main conduit arrangement of the discharged water. In that case, it is achieved that virtually all of the cold water that is already present in the main conduit arrangement at the start of operation of the beverage making device is discharged, while on the other hand, a volume of the discharged water is kept as small as possible.

The invention covers an option of monitoring the volume of the discharged water in order to keep track of the volume of the discharged water. For example, it is possible that the beverage making device is equipped with a flow meter, and that the controller of the beverage making device is configured to receive input from the flow meter, wherein the algorithm includes steps to determine a value that is representative of a volume of water that is discharged from the main conduit arrangement to the water collecting area during the preheating procedure on the basis of the input, to compare the value to a reference value, and to terminate the discharge of water from the main conduit arrangement to the water collecting area as soon as the value is found to exceed the reference value.

In a practical embodiment, the beverage making device according to the invention further comprises a pumping arrangement configured to subject water in the main conduit arrangement to a pumping action in a direction downstream of the heater, as known in the art. In this respect, it is noted that it is practical if, during the preheating procedure, both a) the discharge of water from the main conduit arrangement to the water collecting area and b) the supply of hot water from the heater to the brew chamber through the main conduit arrangement are realized by operating the pumping arrangement. Further, it is noted that as an alternative to the above-mentioned option of monitoring the volume of the discharged water in order to keep track of the volume of the discharged water, it is possible that the algorithm includes steps to operate the pumping arrangement at a predetermined rate and during a predetermined time to realize the discharge of water from the main conduit arrangement to the water collecting area, on the basis of the fact that a known volume of water may be displaced in that way.

In respect of the water collecting area, it is noted that this may be an area that is arranged and configured to receive all of the waste water from the beverage making device, i.e. all of the water that does not end up in the beverages which are made by means of the beverage making device. It is known in the art that such a water collecting area may be present in the form of a component that is commonly referred to as drip tray and that is arranged at a position underneath a spout configured to emit the beverage, i.e. to release the beverage to outside the beverage making device so that it can be collected in a receptacle such as a cup.

The above-described and other aspects of the invention will be apparent from and elucidated with reference to the following detailed description of a practical embodiment of a bean-to-cup espresso coffee machine that is controllable to perform a preheating procedure during in which a brew chamber of the coffee machine is rinsed with hot water prior to a beverage brewing process.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of a coffee machine according to an embodiment of the invention, and
Figure 2 shows an example of the hydraulic system of the coffee machine.

### DETAILED DESCRIPTION OF EMBODIMENTS

The following detailed description of specific examples covered by the invention is intended for purposes of illustration only and not to limit the scope of protection as defined in the claims. Generally speaking, the invention is in the field of beverage making devices comprising a brew chamber, and relates to a preheating procedure as may be applied to a beverage making device for the purpose of rinsing the brew chamber with hot water prior to a beverage brewing process. An insight of the invention is that a path between a heater of the beverage making device and the brew chamber is cold when the preheating procedure is initiated. By removing the cold water from the path as mentioned, the rinsing procedure can be done more efficiently, wherein only hot water is used to heat up the brew chamber. As a result, the in-cup temperature of the first cup is not compromised, and the total volume of the water used in the rinsing procedure is kept as small as possible.

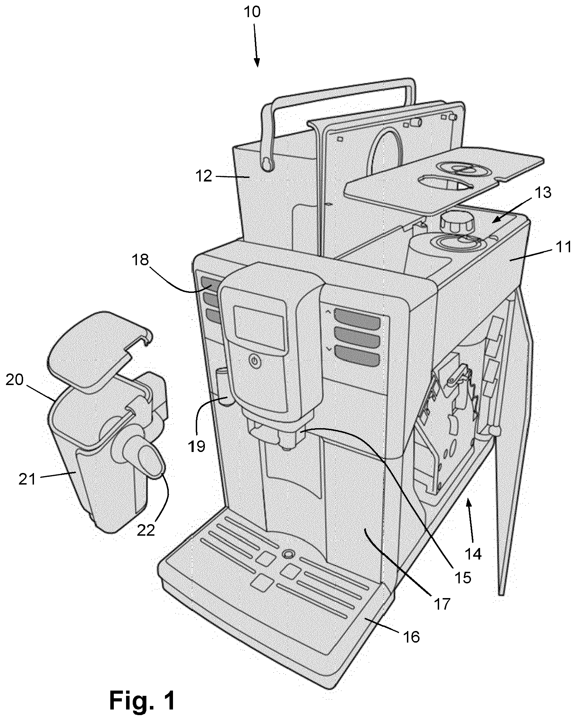

Figure 1 shows a bean-to-cup espresso coffee machine 10 as a practical example of a beverage making device according to the invention. The coffee machine 10 is shown in a normal, operational orientation in figure 1, and where any reference having an orientation aspect is made in the present text, such reference is to be understood against the background of this normal, operational orientation.

The coffee machine 10 comprises a main body 11 having a space for accommodating a removably arranged water reservoir 12 and a space 13 for accommodating coffee beans. The coffee machine 10 further comprises an internal grinding mechanism for creating fresh coffee grinds as brewable matter, a brew chamber for receiving the coffee grinds, a pressurizing system for compressing the coffee grinds, a heater for heating water, and a pumping arrangement for pumping heated water through coffee grinds in the brew chamber. These components, which are not indicated in figure 1, are located in an internal space 14 of the main body 11. The pressurized system for compressing the coffee grinds may be a ground bean compressor comprising a piston that is movable in the brew chamber. The heater may comprise a thermoblock or a flow-through heater, for example.

The coffee machine 10 has a coffee outlet 15 for outputting a coffee drink. The coffee outlet 15 is located over a drip tray 16 that defines a water collecting area of the coffee machine 10. The coffee outlet 15 is also commonly referred to as spout. A waste bin 17 is provided for receiving used coffee grinds after a coffee brewing process has taken place. It is practical if the waste bin 17 is removable from the main body 11 in order to facilitate emptying and cleaning of the waste bin 17. The coffee machine 10 further has a user interface 18 for receiving user selections, such as for water selection and for other drinks selections. At least some of the other drinks selections may relate to drinks recipes which include frothed milk, including drinks recipes which include both coffee and frothed milk. The user interface 18 may also be functional to show relevant information to the user, in which case it may be practical if the user interface 18 comprises some type of screen.

Besides the coffee outlet 15 for outputting a coffee drink, the coffee machine 10 has a steam outlet 19 for outputting steam. The steam outlet 19 can also be used for delivering hot water, depending on the user selection at the user interface 18. The coffee machine 10 may comprise an additional heater for generating steam to be supplied at the steam outlet 19. Delivering steam is useful when it is required to heat and/or froth milk. It is possible that the coffee machine 10 includes a milk frothing unit 20 as shown in figure 1, which is separate from the main body 11, which is couplable to the steam outlet 19 and which comprises a milk container 21 and an outlet 22 for letting out frothed milk. Delivering hot water provides additional options to the user, such as making tea or instant soup. Hot water intended for emission at the steam outlet 19 follows another path from the heater 24 through the coffee machine 10 than hot water intended for use in a coffee brewing process, wherein the hot water does not pass the brew chamber.

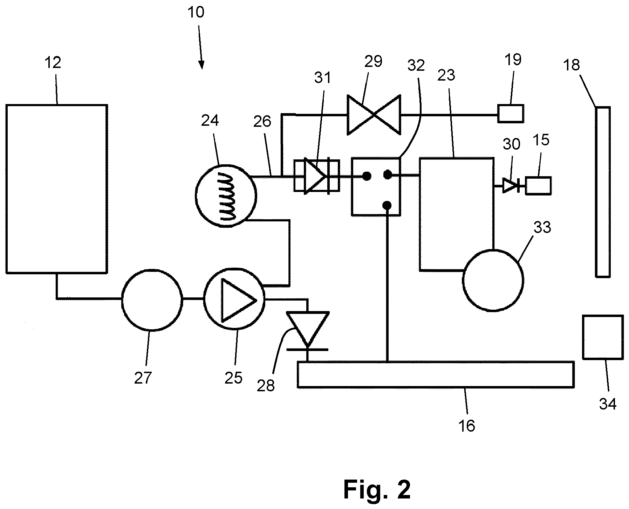

Figure 2 shows a scheme of various components of the coffee machine 10, including the water reservoir 12, the coffee outlet 15, the drip tray 16, the user interface 18 and the steam outlet 19, and also the brew chamber 23, the heater 24, and the pumping arrangement 25 located in the internal space 14 of the main body 11. In figure 2, various conduits of a conduit system of the coffee machine 10 are indicated as continuous lines. The conduit system includes a main conduit arrangement 26 configured to enable transport of water from the heater 24 to the brew chamber 23, wherein the main conduit arrangement 26 may comprise a tube-like conduit or a system of tube-like conduits, for example. The coffee machine 10 further comprises a flow meter 27 located between the water reservoir 12 and the pumping arrangement 25, and various valves. In particular, the following valves are present in the coffee machine 10:
- an overpressure valve 28 located between the pumping arrangement 25 and the drip tray 16,
- an electronic valve 29 located between the heater 24 and the steam outlet 19,
- an outlet valve 30 located on the brew chamber 23 upstream of the coffee outlet 15,
- a check valve 31 arranged in the main conduit arrangement 26, an inlet of the check valve 31 being coupled to the heater 24, and
- an intermediate valve 32 arranged in the main conduit arrangement 26 as well, an outlet of the intermediate valve 32 being coupled to the brew chamber 23.

The electronic valve 29 could be a single valve, but it is also possible that more than one valve is positioned between the heater 24 and the steam outlet 14 for realizing different variations of the circuit for delivering milk/hot water/steam. Further, it is also possible that the electronic valve 29 and/or the at least one additional valve are configured to enable a discharge of water to the drip tray 16.

The brew chamber 23 is movable between two positions by means of a motor 33, namely a position as illustrated in figure 2, which is a coffee brewing position at which the brew chamber 23 is coupled to the main conduit arrangement 26 through the intermediate valve 32 to thereby be capable of receiving hot water from the heater 24, and another position, which is a coffee grinds receiving position at which the brew chamber 23 is coupled to a combination of the space 13 for accommodating coffee beans and the internal grinding mechanism functioning as a matter supply area, to thereby be capable of receiving coffee grinds. In the coffee grinds receiving position, the brew chamber 23 is decoupled from the main conduit arrangement 26 and the intermediate valve 32 extends above the drip tray 16, wherein water as may be present in the brew chamber 23 is allowed to freely pass the intermediate valve 32 and fall down to the drip tray 16 under the influence of gravity. In this way, any water residue water from a previous coffee brewing process may be discharged from the brew chamber 23, which is a contributing factor in achieving that only clean, fresh water is used in a new coffee brewing process. Further, when the brew chamber 23 is in the coffee grinds receiving position, an outlet of the check valve 31 extends above the drip tray 16 as well, wherein the check valve 31 is kept closed as long as the pressure at the inlet side thereof is below a pressure threshold, which may be in a range of 2 to 4 bar, for example.

The intermediate valve 32 is configured such that when the brew chamber 23 is moved from the coffee grinds receiving position to the coffee brewing position, the intermediate valve 32 causes interruption of a water path from the outlet of the check valve 31 to the drip tray 16 and establishment of a water path from the outlet of the check valve 31 to the brew chamber 23. The interruption of the water path from the outlet of the check valve 31 to the drip tray 16 can be realized in any suitable manner. For example, the intermediate valve 32 may comprise a sleeve-like component that is slid over the check valve 31 when the brew chamber 23 is moved from the coffee grinds receiving position to the coffee brewing position, to thereby form a physical bridge along which water can flow from the outlet of the check valve 31 towards the brew chamber 23.

The coffee machine 10 comprises a controller 34 that is configured to control operation of the coffee machine 10. To that end, the controller 34 is arranged and configured to communicate with various components of the coffee machine 10, including the internal grinding mechanism, the pressurizing system for compressing the coffee grinds, the heater 24, the pumping arrangement 25, the flow meter 27, the electronic valve 29 and the motor 33. Further, the controller 34 is configured to receive user input through the user interface 18 and take the input into account in determining respective operation parameters.

The controller 34 is configured to control the coffee machine 10 in such a way that when a user activates the coffee machine 10 and indicates that a coffee drink should be made, a preheating procedure is performed before the actual coffee brewing process is initiated. Generally speaking, the preheating procedure involves activating the heater 24 and activating the pumping arrangement 25 to displace water from the heater 24 to the brew chamber 23 in the coffee brewing position, through the main conduit arrangement 26, for the purpose of rinsing the brew chamber 23 with hot water and thereby heat up the brew chamber 23. The coffee brewing process involves activating the internal grinding mechanism to grind an amount of coffee beans, supplying the coffee grinds to the brew chamber 23 in the coffee grinds receiving position, activating the motor 33 to move the brew chamber 23 from the coffee grinds receiving position to the coffee brewing position, activating the pumping arrangement 25 to displace water from the heater 24 in the active state to the brew chamber 23, and also to increase the pressure prevailing in the brew chamber 24 to such a level that the outlet valve 30 opens and the freshly brewed coffee drink is eventually dispensed from the coffee outlet 15, and activating the motor 33 once more to move the brew chamber 23 from the coffee brewing position to the coffee grinds receiving position as a rest position. The outlet valve 30 may be configured so as to open at a pressure of about 6 bar, for example.

The controller 34 is configured to first apply an algorithm designed to make the coffee machine 10 perform the preheating procedure and to subsequently apply an algorithm designed to make the coffee machine 10 perform the coffee brewing process. The algorithm of the preheating procedure involves steps to operate the heater 24 to heat water and to successively realize a) a discharge of water from the main conduit arrangement 26 to the drip tray 16 and b) a supply of hot water from the heater 24 to the brew chamber 23 through the main conduit arrangement 26. The design of the algorithm is chosen such as to achieve that the main conduit arrangement 26 is emptied of cold water first, which is beneficial to preheating efficiency so that the preheating procedure can be performed in a short time and with a limited amount of water. The algorithm may particularly involve steps of activating the pumping arrangement 25 while the brew chamber 23 is in the coffee grinds receiving position (rest position), so that cold water is discharged from the main conduit arrangement 26 to the drip tray 16, through the check valve 31, shutting off the pumping arrangement 25 to stop the discharge to the drip tray 16, activating the motor 33 to move the brew chamber 23 from the coffee grinds receiving position to the coffee brewing position, activating the heater 24, and activating the pumping arrangement 25 to realize a supply of hot water from the heater 24 to the brew chamber 23, through the main conduit arrangement 26, and to increase the pressure prevailing in the brew chamber 24 to such a level that the outlet valve 30 opens and the rinsing water is dispensed from the coffee outlet 15. In the process, input provided by the flow meter 27 may be used to determine the appropriate moment of shutting off the pumping arrangement 25 to stop the discharge to the drip tray 16, taking into account information about the volume of water that is to be discharged from the main conduit arrangement 26 to the drip tray 16.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The terms "comprise" and "include" as used in this text will be understood by a person skilled in the art as covering the term "consist of'. Hence, the term "comprise" or "include" may in respect of an embodiment mean "consist of', but may in another embodiment mean "contain/have/be equipped with at least the defined species and optionally one or more other species".

Various options which are known to be applicable to beverage making devices are applicable in the context of the invention as well. In this respect, it is noted that in the beverage making device 10 according to the invention, the water reservoir 12 may be either internal or external, or may be plumbed in, a sensor in communication with the controller 34 may be provided for the purpose of monitoring the level of liquid in the drip tray 16, a sensor in communication with the controller 34 may be provided for the purpose of monitoring the level of matter in the waste bin 17, one or more sensors in communication with the controller 34 may be provided for detecting removal of the water reservoir 12, the drip tray 16 and/or the waste bin 17 from the main body 11, etc.

The water collecting area to which the cold water that is initially discharged from the main conduit arrangement 26 during the preheating procedure is received may be an area that is especially provided for this purpose, but it is more practical if use is made of a water collecting area that is already provided in the design of the beverage making device 10, such as the area defined by the drip tray 16, as is the case in the above-described examples, or the area defined by the water reservoir 12. As will be apparent to the person skilled in the art, the above-mentioned fact that the main conduit arrangement 26 may comprise a tube-like conduit or a system of tube-like conduits, for example, is a general fact of the invention and not linked to any of the particular aspects of the examples addressed in the foregoing. The same is applicable to the above-mentioned fact that the heater 24 may comprise a thermoblock or a flow-through heater, for example.

As suggested in the foregoing, a bean-to-cup espresso coffee machine is just one out of many feasible examples of the beverage making device 10 according to the invention. The beverage making device 10 according to the invention does not necessarily need to be equipped with a mechanism for storing coffee beans and grinding coffee beans so that fresh coffee grinds can be supplied to the brew chamber 23 when the beverage making device 10 is operated to make a coffee drink. As an alternative, it is possible that the beverage making device 10 is configured to receive pre-ground coffee or to make use of capsules, pods or the like.

The hydraulic system of the beverage making device 10 according to the invention may be of any suitable layout, as long as a discharge of water from the main conduit arrangement 26 to a suitable water collecting area 16 outside of the brew chamber 23 is possible in some way.

Notable aspects of the invention are summarized as follows. In the field of beverage making devices 10 comprising a brew chamber 23, a preheating procedure may be applied to a beverage making device 10 for the purpose of rinsing the brew chamber 23 with hot water prior to a beverage brewing process. However, a path 26 between a heater 24 of the beverage making device 10 and the brew chamber 23 is cold when the preheating procedure is initiated. Measures are taken to remove the cold water from the path 26 as mentioned, so that the rinsing procedure can be done more efficiently, wherein only hot water is used to heat up the brew chamber 23. As a result, the in-cup temperature of the first cup is not compromised, and the total volume of the water used in the rinsing procedure is kept as small as possible.

## Claims

1. Method of operating a beverage making device (10) comprising a brew chamber (23) configured to enable a beverage brewing process, a heater (24) configured to heat water, a main conduit arrangement (26) configured to enable transport of water from the heater (24) to the brew chamber (23), and a water collecting area (16) outside of the brew chamber (23), the method comprising performing a preheating procedure in which the brew chamber (23) is rinsed with hot water prior to the beverage brewing process, wherein, during the preheating procedure, the heater (24) is operated to heat water, and a) a discharge of water from the main conduit arrangement (26) to the water collecting area (16) and b) a supply of hot water from the heater (24) to the brew chamber (23) through the main conduit arrangement (26) are successively realized.

2. Method according to claim 1, wherein, during the preheating procedure, a condition of the main conduit arrangement (26) is changed from a condition in which the main conduit arrangement (26) is enabled to let out water to the water collecting area (16) and disabled to let out water to the brew chamber (23) to a condition in which the main conduit arrangement (26) is enabled to let out water to the brew chamber (23).

3. Method according to claim 1 or 2, wherein the brew chamber (23) is movably arranged in the beverage making device (10), and wherein, during the preheating procedure, a position of the brew chamber (23) is changed from a position at which the brew chamber (23) is decoupled from the main conduit arrangement (26) to a position at which the brew chamber (23) is coupled to the main conduit arrangement (26).

4. Method according to claim 3, wherein the beverage making device (10) further comprises a matter supply area (13) configured to supply brewable matter, and wherein the position at which the brew chamber (23) is decoupled from the main conduit arrangement (26) is a position at which coupling of the brew chamber (23) to the matter supply area (13) takes place for enabling a supply of the brewable matter to the brew chamber (23) at the start of the beverage brewing process.

5. Method according to any of claims 1-4, wherein the discharge of water from the main conduit arrangement (26) to the water collecting area (16) is terminated when a volume of the discharged water is practically the same as a volume of the main conduit arrangement (26) between the heater (24) and an exit position on the main conduit arrangement (26) of the discharged water.

6. Method according to claim 5, wherein the volume of the discharged water is monitored in order to keep track of the volume of the discharged water.

7. Method according to any of claims 1-6, wherein the beverage making device (10) further comprises a pumping arrangement (25) configured to subject water in the main conduit arrangement (26) to a pumping action in a direction downstream of the heater (20), and wherein, during the preheating procedure, both a) the discharge of water from the main conduit arrangement (26) to the water collecting area (16) and b) the supply of hot water from the heater (24) to the brew chamber (23) through the main conduit arrangement (26) are realized by operating the pumping arrangement (25).

8. Beverage making device (10), comprising:
- a brew chamber (23) configured to enable a beverage brewing process,
- a heater (24) configured to heat water,
- a main conduit arrangement (26) configured to enable transport of water from the heater (24) to the brew chamber (23),
- a water collecting area (16) outside of the brew chamber (23), and
- a controller (34) configured to control operation of the beverage making device (10), wherein the controller (34) is configured to apply an algorithm designed to make the beverage making device (10) perform a preheating procedure in which the brew chamber (23) is rinsed with hot water prior to the beverage brewing process, and wherein the algorithm includes steps to operate the heater (24) to heat water and to successively realize a) a discharge of water from the main conduit arrangement (26) to the water collecting area (16) and b) a supply of hot water from the heater (24) to the brew chamber (23) through the main conduit arrangement (26).

9. Beverage making device (10) according to claim 8, configured to enable setting a condition of the main conduit arrangement (26) to be one of a condition in which the main conduit arrangement (26) is enabled to let out water to the water collecting area (16) and disabled to let out water to the brew chamber (23) and a condition in which the main conduit arrangement (26) is enabled to let out water to the brew chamber (23), and wherein the steps of the algorithm to successively realize a) a discharge of water from the main conduit arrangement (26) to the water collecting area (16) and b) a supply of hot water from the heater (24) to the brew chamber (23) through the main conduit arrangement (26) involve changing the condition of the main conduit arrangement (26) from the first condition to the second condition.

10. Beverage making device (10) according to claim 8 or 9, wherein the brew chamber (23) is movable in the beverage making device (10) between a position at which the brew chamber (23) is decoupled from the main conduit arrangement (26) and a position at which the brew chamber (23) is coupled to the main conduit arrangement (26).

11. Beverage making device (10) according to claim 10, further comprising a matter supply area (13) configured to supply brewable matter, and wherein the position at which the brew chamber (23) is decoupled from the main conduit arrangement (26) is a position at which the brew chamber (23) is coupled to the matter supply area (13).

12. Beverage making device (10) according to claim 10 or 11 insofar as dependent on claim 9, comprising a check valve (31) arranged in the main conduit arrangement (26), an inlet of the check valve (31) being coupled to the heater (24) and an outlet extending above the water collecting area (16), wherein the beverage making device (10) further comprises an intermediate valve (32) coupled to the brew chamber (23) that is configured to cause interruption of a water path from the outlet of the check valve (31) to the water collecting area (16) and establishment of a water path from the outlet of the check valve (31) to the brew chamber (23) when the brew chamber (23) is moved from the position of being decoupled from the main conduit arrangement (26) to the position of being coupled to the main conduit arrangement (26).

13. Beverage making device (10) according to any of claims 8-12, comprising a flow meter (27), wherein the controller (34) is configured to receive input from the flow meter (27), and wherein the algorithm includes steps to determine a value that is representative of a volume of water that is discharged from the main conduit arrangement (26) to the water collecting area (16) during the preheating procedure on the basis of the input, to compare the value to a reference value, and to terminate the discharge of water from the main conduit arrangement (26) to the water collecting area (16) as soon as the value is found to exceed the reference value.

14. Beverage making device (10) according to any of claims 8-12, comprising a pumping arrangement (25) configured to subject water in the main conduit arrangement (26) to a pumping action in a direction downstream of the heater (24), wherein the algorithm includes steps to operate the pumping arrangement (25) at a predetermined rate and during a predetermined time to realize the discharge of water from the main conduit arrangement (26) to the water collecting area (16).

15. Beverage making device (10) according to any of claims 8-14, being a bean-to-cup espresso coffee machine comprising a bean grinder and a ground bean compressor.
